# EUROPÄISCHE PATENTSCHRIFT

(11) **EP 3 037 739 B1**
(45) Veröffentlichungstag und Bekanntmachung des Hinweises auf die Patenterteilung: **09.08.2017**
(21) Anmeldenummer: 14200108.0
(22) Anmeldetag: 23.12.2014
(51) Int. Cl.: F24F 6/14, C02F 1/42, C02F 1/44, C02F 1/68

(54) **Verfahren und Vorrichtung zur Luftbefeuchtung**
Method and device for the humidification of air
Procédé et dispositif destinés à l'humidification de l'air

(43) Veröffentlichungstag der Anmeldung: 29.06.2016
(73) Patentinhaber: Condair Group AG, 8808 Pfäffikon (CH)
(72) Erfinder: De Boer, Michael, 20099 Hamburg (DE); Bork, Torben, 20537 Hamburg (DE); Maas, Daniel, 22459 Hamburg (DE)
(74) Vertreter: Hauck Patentanwaltspartnerschaft mbB

(56) Entgegenhaltungen:
- DE-B4-102004 007 751

## Beschreibung

Die Erfindung bezieht sich auf ein Verfahren und auf eine Vorrichtung zur Luftbefeuchtung.

Viele Produktionsprozesse müssen zum Erreichen der geforderten Qualität bei einer bestimmten Luftfeuchtigkeit durchgeführt werden. Zum Einstellen einer optimalen Luftfeuchtigkeit werden Luftbefeuchter eingesetzt. Überwiegend sind dies Hochdruck-Düsenbefeuchter, die das zugeführte Wasser in kleinste Tröpfchen umwandeln und als Aerosol in dem zu befeuchtendem Produktionsraum oder anderen Produktionsumgebung vernebeln. Dort verdunsten die Tröpfchen und erhöhen die Luftfeuchtigkeit. Mittels einer Steuerung/Regelung werden die Hochdruckdüsen so lange betrieben, bis die geforderte relative Luftfeuchtigkeit erreicht ist.

Grundsätzlich werden möglichst kleine Tröpfchengrößen angestrebt, weil hierdurch eine große Oberfläche des Aerosolstroms erreicht und die Verdunstung gefördert wird. Außerdem fallen zu große Tröpfchen vor der Verdunstung auf den Boden und führen zu unerwünschter Nässebildung auf Oberflächen. Besonders kleine Aerosole werden mit speziellen Dralldüsen und einer Zerstäubung unter einem Druck von bis zu 100 bar erreicht.

Kalk, Salze und andere Inhaltsstoffe des Wassers führen zu einer Niederschlagsbelastung und lagern sich an den Hochdruckdüsen ab. Bekannt ist, das verwendete Wasser mittels einer Umkehrosmose-Wasseraufbereitung von störenden Inhaltsstoffen zu befreien.

Umkehrosmose-Wasseraufbereitungen können Mineralien nur bis zu einem gewissen Grad aus dem Wasser entfernen. Eine weitergehende Entmineralisierung ist mittels Ionenaustauschern möglich. Hierdurch verliert das Wasser seine elektrische Leitfähigkeit. Infolgedessen lädt sich der Aerosolstrom beim Verlassen der Hochdruckdüse elektrostatisch auf. Die aufgeladenen Tröpfchen werden von der Düse angezogen, sodass sich daran Tropfen bilden und Wasserschäden verursachen können.

Bei vielen Produktionsprozessen wird nur eine sehr geringe oder gar keine Niederschlagsbelastung der Produktionsumgebung durch Mineralien aus dem zugeführten Wasser toleriert. Dies ist beispielsweise in der elektronischen Industrie und in anderen Bereichen der Fall, in denen unter Reinraumbedingungen gearbeitet werden muss.

Die DE 10 2004 007 751 B4 offenbart ein Verfahren zur Luftbefeuchtung nach dem Oberbegriff von Anspruch 1 und eine Vorrichtung zur Luftbefeuchtung nach Anspruch 7 und löst das Problem der Niederschlagsbelastung der Produktionsumgebung und Tropfenbildung an den Hochdruckdüsen dadurch, dass durch Entfernen von Inhaltsstoffen und Zusetzen eines die Leitfähigkeit erhöhenden Gases (z.B. CO₂) aus zugeführtem Wasser voll entmineralisiertes Reinstwasser erhöhter Leitfähigkeit hergestellt wird. Das voll entmineralisierte Reinstwasser erhöhter Leitfähigkeit wird zerstäubt. Die Niederschlagsbelastung wird durch die vollständige Entmineralisierung des Wassers und die Tropfenbildung durch die Erhöhung der Leitfähigkeit mittels des zugeführten Gases vermieden. Bei einer Ausgestaltung des Verfahrens wird aus dem zugeführten Wasser mittels einer Umkehrosmose-Wasseraufbereitung teilentmineralisiertes Wasser und aus dem teilentmineralisierten Wasser mittels eines Ionenaustauschers voll entmineralisiertes Reinstwasser erzeugt. Der Ionenaustauscher bindet Inhaltsstoffe des teilentmineralisierten Wassers. Wenn der Ionenaustauscher erschöpft bzw. mit Inhaltsstoffen abgesättigt ist, muss er durch einen frischen Ionenaustauscher ersetzt werden. Der abgesättigte Ionenaustauscher wird ggf. regeneriert. Bei Erschöpfung des Ionenaustauschers kommt es zum Durchbruch von Mineralien durch den Ionenaustauscher, die durch einen Anstieg der elektrischen Leitfähigkeit des austretenden Wassers detektierbar sind. Silikate beeinflussen jedoch nicht die Leitfähigkeit des Wassers. Bei einer Absättigung des Ionenaustauschers können Silikate nicht mehr gebunden werden und es kommt zu einem Durchbruch von Silikaten, ohne dass dies durch Messung der elektrischen Leitfähigkeit erkannt wird. Dies kann zu einem unerwünschten Niederschlag von Silikaten in der Produktionsumgebung führen. Eine Online-Messung der Silikate (Kieselsäuremessung) wäre aufwendig und kommt deshalb für den Einsatz in der Luftbefeuchtung nicht in Betracht. Zur Vermeidung von Silikatniederschlägen könnte der Ionenaustauscher ersetzt werden, bevor die Leitfähigkeit des Wassers im Austritt ansteigt, beispielsweise nach Ablauf einer bestimmten Anzahl Betriebsstunden. Nachteilig hieran wäre das Risiko einer nur teilweisen Nutzung der Kapazität des Ionentaustauschers bei zu geringer und das Risiko des Durchbrechens der Silikate bei zu hoher Anzahl Betriebsstunden.

Davon ausgehend liegt der Erfindung die Aufgabe zugrunde, ein Verfahren und eine Vorrichtung zur Luftbefeuchtung zu schaffen, das unter verbesserter Ausnutzung der Kapazität des Ionenaustauschers Niederschläge von Silikaten besser vermeidet.

Die Aufgabe wird durch ein Verfahren mit den Merkmalen des Anspruchs 1 und durch eine Vorrichtung mit den Merkmalen des Anspruchs 7 gelöst. Vorteilhafte Ausgestaltungen des Verfahrens und der Vorrichtung sind in Unteransprüchen angegeben.

Bei dem erfindungsgemäßen Verfahren zur Luftbefeuchtung wird durch Entfernen von Silikaten und anderen Inhaltsstoffen und Zusetzen eines die Leitfähigkeit erhöhenden Gases (z.B. Kohlendioxid) aus zugeführtem Wasser voll entmineralisiertes Reinstwasser erhöhter Leitfähigkeit hergestellt und das voll entmineralisierte Reinstwasser erhöhter Leitfähigkeit mittels mindestens einer Hochdruckdüse zerstäubt, dadurch gekennzeichnet, dass bei der Herstellung des voll entmineralisierten Reinstwassers das Wasser nacheinander durch mindestens zwei Ionenaustauscherpatronen hindurchgeleitet wird, die elektrische Leitfähigkeit des Wassers nach dem Durchgang durch die erste Ionenaustauscherpatrone und vor dem Durchgang durch die zweite Ionenaustauscherpatrone gemessen wird und die Ionenaustauscherpatronen gegen frische Ionenaustauscherpatronen ausgetauscht werden, wenn der gemessene Wert der elektrischen Leitfähigkeit einen bestimmten Schwellenwert erreicht.

Erfindungsgemäß wird bei der Herstellung des voll entmineralisierten Reinstwassers (auch als "deionisiertes Wasser" oder "voll entsalztes (VE) Wasser" bezeichnet) das Wasser nacheinander durch mindestens zwei Ionenaustauscherpatronen hindurchgeleitet. Infolgedessen ist die zuerst durchströmte erste Ionenaustauscherpatrone zuerst erschöpft und lässt Silikate durch. Die aus der ersten Ionenaustauscherpatrone austretenden Silikate werden von der nachfolgend durchströmten zweiten Ionenaustauscherpatrone gebunden, solange diese noch nicht erschöpft ist. Das aus der zweiten Ionenaustauscherpatrone austretende voll entmineralisierte Reinstwasser ist somit frei von Silikaten und wird zerstäubt, ohne dass sich Silikate in den Produktionsumgebung niederschlagen. Die Erschöpfung der ersten Ionenaustauscherpatrone wird an einer Erhöhung der elektrischen Leitfähigkeit des Wassers im Austritt auf einen bestimmten Schwellenwert erkannt. Zwar erhöhen durch die erste Ionenaustauscherpatrone durchbrechende Silikate nicht die elektrische Leitfähigkeit des Wassers. Jedoch wurde herausgefunden, dass dem Durchbruch von Silikaten eine Erhöhung der elektrischen Leitfähigkeit zeitversetzt folgt. Anscheinend ist das Aufnahmevermögen von Ionenaustauscherpatronen für Silikate früher erschöpft als das Aufnahmevermögen für Mineralien, welche die elektrische Leitfähigkeit des Wassers erhöhen und brechen Silikate früher durch die Ionenaustauscherpatrone durch als die Leitfähigkeit erhöhende Mineralien. Die Ionenaustauscherpatronen werden gegen frische Ionenaustauscherpatronen ausgetauscht, wenn die elektrische Leitfähigkeit des Wassers im Austritt der ersten Ionenaustauscherpatrone den Schwellenwert erreicht. Zuvor schon aus der ersten Ionenaustauscherpatrone ausgetretene Silikate werden in der zweiten Ionenaustauscherpatrone gebunden, sodass das in der Produktionsumgebung versprühte Wasser frei von Silikaten und anderen Inhaltsstoffen ist.

Die Erfindung ist insbesondere für die Luftbefeuchtung in Produktionsräumen und anderen Produktionsumgebungen einsetzbar. Ein bevorzugtes Einsatzgebiet ist die elektronische Industrie und andere Produktionsbereiche, in denen unter Reinraumbedingungen gearbeitet werden muss. Ferner ist die Erfindung insbesondere im medizinischen und pharmazeutischen Bereich oder im Komfortbereich (z.B. Büroräume) anwendbar.

In der vorliegenden Anmeldung ist als "voll entmineralisiertes Reinstwasser" ein Wasser bezeichnet, aus dem Silikate und andere Inhaltsstoffe unter Einsatz von Ionenaustauscherpatronen ganz oder teilweise entfernt worden sind. Das Ausmaß der Entfernung der Inhaltsstoffe aus dem Wasser hängt von den Anforderungen der jeweils zu befeuchtenden Umgebung ab. Vorzugsweise werden Silikate bis auf eine Konzentration von max. 1,5 mg/l, weiterhin vorzugsweise von max. 1 mg/l, weiterhin vorzugsweise von max. 0,5 mg/l, weiterhin vorzugsweise von max. 0,1 mg/l aus dem Wasser entfernt. Vorzugsweise werden die Mineralien in einem Ausmaß aus dem Wasser entfernt, dass die elektrische Leitfähigkeit des voll entmineralisierten Reinstwassers maximal 2 µS, vorzugsweise maximal 1 µS, vorzugsweise max. 0,6 µS, weiterhin vorzugsweise max. 0,4 µS beträgt, wenn dem Wasser noch kein die Leitfähigkeit erhöhtes Gas zugesetzt ist.

Ionenaustauscherpatronen sind mit einem Ionenaustauschermaterial gefüllte Behälter. Vorzugsweise handelt es sich dabei um Säulen- bzw. flaschenförmige Behälter. Sie können insbesondere aus Stahl, Kunststoff oder Glas oder einer Kombination der genannten Materialien hergestellt sein.

Gemäß einer Ausgestaltung des Verfahrens werden die Ionenaustauscherpatronen gegen frische Ionenaustauscherpatronen ausgetauscht, wenn eine bestimmte Zeitspanne vergangen ist, nachdem die gemessene elektrische Leitfähigkeit den Schwellenwert erreicht hat. Hierdurch wird das Aufnahmevermögen für Silikate und andere Inhaltsstoffe der zweiten Ionenaustauscherpatrone besser ausgenutzt. Die Zeitspanne, nach der die Ionenaustauscherpatrone gegen frische Ionenaustauscherpatronen ausgetauscht werden, ist vorzugsweise ein Erfahrungswert. In einem einfachen Fall ist die Zeitspanne ein Erfahrungswert, der für eine Luftbefeuchtung mit bestimmter (z.B. maximaler oder durchschnittlicher) Leistung, ein zugeführtes Wasser mit bestimmter (z.B. maximaler oder durchschnittlicher) Konzentration an Silikaten und anderen Inhaltsstoffen und die Menge des Ionenaustauscherharzes ermittelt wurde.

Verschiedene Erfahrungswerte können für verschiedene Typen der Ionenaustauscherpatrone, Mengenströme des Wassers und Zusammensetzung des zugeführten Wassers und ggf. weitere Parameter ermittelt werden. Die Zusammensetzung des zugeführten Wassers kann örtlich sehr schwanken und vor Inbetriebnahme des Verfahrens einmalig ermittelt werden. Mit den jeweiligen Parametern des Anwendungsfalles kann auf einen entsprechenden Erfahrungswert für die Zeitspanne zurückgegriffen werden.

Gemäß einer weiteren Ausgestaltung wird aus dem zugeführten Wasser mittels einer Umkehrosmose-Wasseraufbereitung teilentmineralisiertes Wasser und aus dem teilentmineralisierten Wasser mittels der in Serie geschalteten Ionenaustauscherpatronen voll entmineralisiertes Reinstwasser erzeugt. Mittels der Umkehrosmose können die Inhaltsstoffe so weit entfernt werden, dass nur noch 30 % bis 40 % Silikate im Wasser enthalten sind (Rückhalterate 60 % bis 70 %) und der allgemeine Restsalzgehalt auf 1 % bis 2 % fällt. Durch die Ionenaustauscherpatronen wird eine starke weitere Reduzierung der Inhaltsstoffe erreicht. Die Silikate können auf unter 1 mg/l herabgesetzt werden, vorzugsweise auf 0,1 mg/l oder darunter, weiterhin vorzugsweise auf 0,01 mg/l oder darunter, und die elektrische Leitfähigkeit auf unter 1 µS, vorzugsweise auf 0,6 µS oder darunter, weiterhin vorzugsweise auf 0,4 µS oder darunter.

Gemäß einer weiteren Ausgestaltung beträgt der Schwellenwert der elektrischen Leitfähigkeit mindestens 0,4 µS, vorzugsweise mindestens 0,6 µS, weiterhin vorzugsweise mindestens 1 µS. Dies sind bevorzugt Schwellenwerte, wenn die Leitfähigkeit des voll entmineralisierten Reinstwassers vor der Erschöpfung der Ionenaustauscherpatronen auf weniger als 0,4 µS oder auf weniger als 0,6 µS oder auf weniger als 1 µS herabgesetzt ist.

Gemäß einer bevorzugten Ausgestaltung wird das die elektrische Leitfähigkeit erhöhende Gas dem Wasser nach der Messung der elektrischen Leitfähigkeit zugeführt. Hierdurch wird vermieden, dass das zugeführte Gas die Messung einer auf Erschöpfung der ersten Ionenaustauscherpatrone beruhenden Erhöhung der elektrischen Leitfähigkeit des Wassers verfälscht. Insbesondere bei einer genauen Dosierung des Gases ist es aber auch möglich, das Gas dem Wasser vor der Messung der elektrischen Leitfähigkeit zuzuführen, da sich die Erschöpfung der ersten Ionenaustauscherpatrone in einer weiteren Erhöhung der elektrischen Leitfähigkeit zeigt. Gemäß einer bevorzugten Ausgestaltung wird das die elektrische Leifähigkeit erhöhende Gas dem voll entmineralisierten Reinstwasser zugeführt. Hierdurch können Gasverluste und eine Verringerung der Leitfähigkeit vor dem Austritt aus den Hochdruckdüsen vermieden werden.

Gemäß einer Ausgestaltung wird das vollentmineralisierte Reinstwasser erhöhter Leitfähigkeit in einen Kreislauf gepumpt, aus dem es abgezogen und der Zerstäubung zugeführt wird.

Gemäß einer weiteren Ausgestaltung wird das Gas dem Kreislauf zugeführt.

Gemäß einer weiteren Ausgestaltung wird die Leitfähigkeit des Reinstwassers im Kreislauf gemessen.

Die erfindungsgemäße Vorrichtung zur Luftbefeuchtung hat eine einen Zulauf aufweisende Vollentmineralisierungs-Wasseraufbereitung, eine dem Zulauf nachgeordnete Zuführeinrichtung für ein Gas und eine der Vollentmineralisierungs-Wasseraufbereitung und der Zuführeinrichtung nachgeordnete Einrichtung zum Zerstäuben von Wasser, wobei in einer Leitung zwischen der Vollentmineralisierungs-Wasseraufbereitung und der Einrichtung zum Zerstäuben eine Hochdruckpumpe angeordnet ist und die Einrichtung zum Zerstäuben mindestens eine Hochdruckdüse umfasst, dadurch gekennzeichnet, dass die Vollentmineralisierungs-Wasseraufbereitung mindestens zwei in Serie hintereinandergeschaltete Ionenaustauscherpatronen umfasst und in eine Verbindungsleitung zwischen den beiden Ionenaustauscherpatronen eine Leitwertmesseinrichtung zum Messen der elektrischen Leitfähigkeit des Wassers zwischen den beiden Ionenaustauscherpatronen eingebaut ist und die Leitfähigkeitsmesseinrichtung mit einer Auswerteeinrichtung verbunden ist, die so ausgelegt ist, dass sie ermittelt, wenn der gemessene Wert der elektrischen Leitfähigkeit einen bestimmten Schwellenwert erreicht und bei Erreichen des Schwellenwertes ein Signal ausgibt. Das Signal ist beispielsweise ein Warnsignal oder ein Steuerungssignal zum Steuern einer Anzeige, wodurch der Betreiber der Vorrichtung auf die Notwendigkeit hingewiesen wird, die Ionenaustauscherpatronen auszutauschen. Ferner kann das Signal ein Steuersignal sein, welches Schaltventile so steuert, dass automatisch die verbrauchten Ionenaustauscherpatronen von der Wasseraufbereitung getrennt und frische Ionenaustauscherpatronen in die Wasseraufbereitung eingeschaltet werden. Ferner ist es möglich, die getrennten Ionenaustauscherpatronen automatisch in eine Vorrichtung zum Regenerieren von Ionenaustauscherpatronen einzuschalten, um diese zu frischen Ionenaustauscherpatronen zu regenerieren. Wenn die frischen Ionenaustauscherpatronen erschöpft sind, können die regenerierten Ionenaustauscherpatronen erneut automatisch in die Wasseraufbereitung hineingeschaltet werden.

Gemäß einer weiteren Ausgestaltung ist die Auswerteeinrichtung so ausgelegt, dass sie das Signal ausgibt, wenn nach Erreichen des Schwellenwertes eine vorgegebene Zeitdauer abgelaufen ist. Hierdurch wird das Aufnahmevermögen der Ionenaustauscherpatronen für Inhaltsstoffe des zugeführten Wassers besser ausgenutzt.

Gemäß einer bevorzugten Ausgestaltung umfasst die Vollentmineralisierungs-Wasseraufbereitung eine dem Zulauf nachgeordnete und den Ionenaustauscherpatronen vorgeordnete Umkehrosmose-Wasseraufbereitung. Hierdurch wird eine besonders effektive Entmineralisierung des Wassers erreicht.

Gemäß einer weiteren Ausgestaltung sind die Ionenaustauscherpatronen über Schnellverschlüsse mit Leitungen des Systems verbunden. Dies erleichtert das Austauschen der erschöpften Ionenaustauscherpatronen durch frische Ionenaustauscherpatronen.

Gemäß einer weiteren Ausgestaltung ist die Zuführeinrichtung in Durchlaufrichtung des Wassers durch die Vollentmineralisierungs-Wasseraufbereitung hinter der Leitwertmesseinrichtung angeordnet. Hierdurch wird vermieden, dass das die elektrische Leitfähigkeit erhöhende Gas die Messung der elektrischen Leitfähigkeit verfälscht. Gemäß einer bevorzugten Ausgestaltung ist die Zuführeinrichtung in Durchlaufrichtung des Wassers der Vollentmineralisierungs-Wasseraufbereitung nachgeordnet. Hierdurch können Gasverluste und eine Aufladung des Wassers beim Austritt aus den Hochdruckdüsen besser vermieden werden.

Gemäß einer weiteren Ausgestaltung ist die Zuführeinrichtung ein in einer Leitung zwischen Zulauf und Einrichtung zum Zerstäuben angeordnetes T-Stück, das einen Abzweig für die Einspeisung eines Gases aufweist.

Gemäß einer weiteren Ausgestaltung ist in der Leitung zwischen einer Einspeisung für das Gas und der Zuführeinrichtung ein Steuerventil angeordnet.

Gemäß einer weiteren Ausgestaltung ist in einer Leitung zwischen der Zuführeinrichtung und der Einrichtung zum Zerstäuben eine Leitwertmesszelle angeordnet.

Gemäß einer weiteren Ausgestaltung sind die Leitwertmesszelle und das Steuerventil mit einem Regler verbunden.

Gemäß einer weiteren Ausgestaltung ist in der Leitung zwischen der Zuführeinrichtung und der Einrichtung zum Zerstäuben eine Mischeinrichtung angeordnet.

Gemäß einer weiteren Ausgestaltung ist die Hochdruckpumpe in einer der Vollentmineralisierungs-Wasseraufbereitung nachgeordneten Ringleitung angeordnet, die über mindestens einen Abzweig mit mindestens einer Hochdruckdüse verbunden ist.

Gemäß einer weiteren Ausgestaltung ist die Zuführeinrichtung und/oder die Mischeinrichtung und/oder die Leitwertmesszelle vor der Ringleitung angeordnet.

Gemäß einer weiteren Ausgestaltung ist der Hochdruckdüse ein Schaltventil vorgeordnet.

Gemäß einer weiteren Ausgestaltung ist die Zuführeinrichtung mit mindestens einer Gasflasche verbunden.

Gemäß einer weiteren Ausgestaltung enthält die Gasflasche CO₂.

Nachfolgend wird ein Ausführungsbeispiel der Erfindung anhand der anliegenden Zeichnung in seiner grundsätzlichen Funktionsweise erläutert.

Wasser (z.B. Leitungswasser) wird über einen Zulauf 1 einer Umkehrosmose-Wasseraufbereitungsanlage 2 zugeführt. Darin wird das Wasser zu ca. 98% entmineralisiert. Die abgeschiedenen Mineralien bzw. Salze werden am Ablauf 3 in eine Abwasserleitung geleitet. Das teilentmineralisierte Wasser steht am Ausgang 4 der Umkehrosmose-Wasseraufbereitungsanlage 2 zur Verfügung und wird in eine erste Ionenaustauscherpatrone 5 geleitet. Vom Ionenaustauschermaterial in der ersten Ionenaustauscherpatrone 5 wird der Restmineralgehalt von ca. 2% eliminiert, sodass am Ausgang 6 der ersten Ionenaustauscherpatrone 5 vollentmineralisiertes Reinstwasser austritt.

Hinter dem Ausgang 6 wird das Reinstwasser durch eine Leitwertmesszelle 17 hindurchgeleitet und einer zweiten Ionenaustauscherpatrone 18 zugeführt. Vom Ionenaustauschermaterial in der zweiten Ionenaustauscherpatrone 18 werden Silikate und andere Mineralien aus dem teilentmineralisierten Wasser entfernt, wenn die erste Ionenaustauscherpatrone 5 erschöpft ist. Somit steht am Ausgang 19 der zweiten Ionenaustauscherpatrone 18 auch nach Erschöpfung der ersten Ionenaustauscherpatrone 5 voll entmineralisiertes Reinstwasser zur Verfügung.

Die Leitwertmesszelle 17 ist mit einer Auswerteeinrichtung 20 verbunden, die ein Signal ausgibt, wenn der Messwert der Leitwertmesszelle 17 einen Schwellenwert erreicht. Das Signal ist z.B. ein akustisches oder optisches Warnsignal oder steuert eine Anzeige auf einem Display 21. Wenn das Signal ausgegeben wird, ist die Ionenaustauscherpatrone 5 erschöpft und brechen Mineralien durch, welche die Leitfähigkeit des Wassers erhöhen. Schon vorher war die Aufnahmefähigkeit der ersten Ionenaustauscherpatrone 5 für Silikate erschöpft. Die zweite Ionenaustauscherpatrone 18 verhindert jedoch, dass Silikate im Produktionsraum versprüht werden. Das Signal wird rechtzeitig gegeben, bevor das Aufnahmevermögen der zweiten Ionenaustauscherpatrone 18 für Silikate erschöpft ist. Bevorzugt wird das Signal von der Auswerteeinrichtung 20 eine bestimme Anzahl von Betriebsstunden der Vorrichtung nach dem Erreichen des Schwellenwertes gegeben. Das Signal zeigt dem Betreiber der Vorrichtung an, dass die Ionenaustauscherpatronen 5 und 18 ausgetauscht oder regeneriert werden müssen.

Hinter dem Ausgang 19 wird das Reinstwasser mittels der Pumpe 7 auf einen Druck von über 80 bar gebracht und der Hochdruckleitung 8 zugeführt. Das Wasser wird in der als Ringleitung ausgebildeten Hochdruckleitung 8 im Kreislauf geführt. Eine weitere Leitwertmesszelle 9 misst permanent den Leitwert des Wassers in der Hochdruckleitung 8. Der Messwert wird an einen Regler 10 einer Prozesselektronik übertragen. Liegt der gemessene Leitwert unterhalb eines einstellbaren Grenzwerts, steuert der Regler 10 ein als Proportionalventil ausgebildetes Steuerventil 11 an. Hierdurch wird das in einer Gasflasche 12 bereitgestellte Gas (vorzugsweise CO₂) durch eine als T-Stück ausgebildete Zuführeinrichtung 13 (Impfstelle) zwischen Ausgang 19 und Pumpe 7 in das Reinstwasser eindosiert. In einem Diffusor bzw. statischen Mischer 14 wird das Gas im Wasser vermischt bzw. aufgelöst.

Ist der von der Leitwertmesszelle 9 zwischen Diffusor bzw. statischem Mischer 14 und Hochdruckleitung 8 gemessene Leitwert auf einen eingestellten Grenzwert angestiegen, erfolgt eine elektrische Freigabe zur Luftbefeuchtung. Hierdurch wird sichergestellt, dass das Reinstwasser einen bestimmten Leitwert aufweist. Ferner wird die Luftfeuchte der Raumluft mittels eines Feuchtesensors überwacht, der mit der Prozesselektronik verbunden ist. Wenn die Raumluft angefeuchtet werden muss, öffnet die Prozesselektronik die Magnetventile 15, sodass das Reinstwasser den Hochdruckdüsen 16 zugeführt und von diesen versprüht wird. Das Reinstwasser weist durch das eingemischte Gas eine ausreichende Leitfähigkeit auf, sodass es nicht zur elektrostatischen Aufladung des versprühten Reinstwassers kommt. Das Reinstwasser verdampft im Produktionsraum und hierbei löst sich das Gas rückstandslos in der Raumluft auf. Es kommt weder zu einer Nässebildung an den Düsen noch zu einer Niederschlagsbelastung des Raumes durch Verunreinigungen des versprühten Wassers.

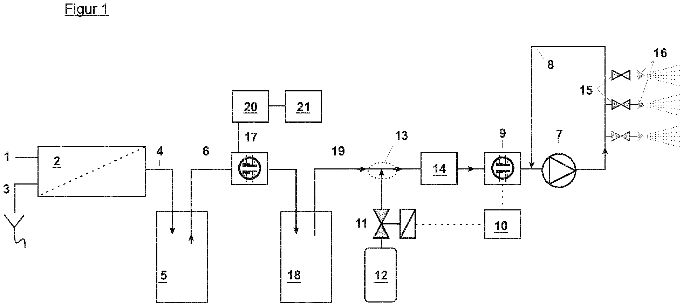

## Patentansprüche

1. Verfahren zur Luftbefeuchtung, bei dem durch Entfernen von Silikaten und anderen Inhaltsstoffen und Zusetzen eines die Leitfähigkeit erhöhenden Gases aus zugeführtem Wasser voll entmineralisiertes Reinstwasser erhöhter Leitfähigkeit hergestellt und das voll entmineralisierte Reinstwasser erhöhter Leitfähigkeit mittels mindestens einer Hochdruckdüse zerstäubt wird, **dadurch gekennzeichnet, dass** bei der Herstellung des voll entmineralisierten Wassers Wasser nacheinander durch mindestens zwei Ionenaustauscherpatronen hindurchgeleitet wird, die elektrische Leitfähigkeit des Wassers nach dem Durchgang durch die erste Ionenaustauscherpatrone und vor dem Durchgang durch die zweite Ionenaustauscherpatrone gemessen wird und die Ionenaustauscherpatronen gegen frische Ionenaustauscherpatronen ausgetauscht werden, wenn der gemessene Wert der elektrischen Leitfähigkeit einen bestimmten Schwellenwert erreicht.

2. Verfahren nach Anspruch 1, bei dem die Ionenaustauscherpatronen gegen frische Ionenaustauscherpatronen ausgetauscht werden, wenn eine bestimmte Zeitspanne vergangen ist, nachdem die gemessene elektrische Leitfähigkeit den Schwellenwert erreicht hat.

3. Verfahren nach Anspruch 1 oder 2, bei dem aus dem zugeführten Wasser mittels einer Umkehrosmose-Wasseraufbereitung teilentmineralisiertes Wasser und aus dem teilentmineralisierten Wasser mittels in Serie geschalteter Ionenaustauscher voll entmineralisiertes Reinstwasser erzeugt wird.

4. Verfahren nach einem der Ansprüche 1 bis 3, bei dem der Schwellenwert der elektrischen Leitfähigkeit mindestens 0,4 µS, vorzugsweise mindestens 0,6 µS, weiterhin vorzugsweise mindestens 1 µS beträgt.

5. Verfahren nach einem der Ansprüche 2 bis 4, bei dem die vorbestimmte Zeitspanne nach dem Erreichen des Schwellenwertes, bei deren Ablauf die Ionenaustauscherpatronen gegen frische Ionenaustauscherpatronen ausgetauscht werden, ein Erfahrungswert ist, der für eine Luftbefeuchtung mit bestimmter Leistung, ein zugeführtes Wasser mit bestimmter Konzentration an Silikaten und eine bestimmte Menge des Ionenaustauscherharzes ermittelt wurde.

6. Verfahren nach einem der Ansprüche 1 bis 5, bei dem das die elektrische Leitfähigkeit erhöhende Gas dem voll entmineralisierten Reinstwasser zugeführt wird.

7. Vorrichtung zur Luftbefeuchtung mit einer einen Zulauf (1) aufweisenden Vollentmineralisierungs-Wasseraufbereitung (2, 5, 18), einer dem Zulauf (1) nachgeordneten Zuführeinrichtung (13) für ein Gas und einer der Vollentmineralisierungs-Wasseraufbereitung (2, 5, 18) und der Zuführeinrichtung (13) nachgeordneten Einrichtung zum Zerstäuben (16) von Wasser, wobei in einer Leitung zwischen der Vollentmineralisierungs-Wasseraufbereitung (2, 5, 18) und der Einrichtung zum Zerstäuben (16) eine Hochdruckpumpe (7) angeordnet ist und die Einrichtung zum Zerstäuben (16) mindestens eine Hochdruckdüse umfasst, **dadurch gekennzeichnet, dass** die Vollentmineralisierungs-Wasseraufbereitung (2, 5, 18) mindestens zwei in Serie hintereinander geschaltete Ionenaustauscherpatronen (5, 18) umfasst und in eine Verbindungsleitung zwischen den beiden Ionenaustauscherpatronen (5, 18) eine Leitwertmesseinrichtung (17) zum Messen der elektrischen Leitfähigkeit des Wassers zwischen den beiden Ionenaustauscherpatronen (5,18) eingebaut ist und die Leitfähigkeitsmesseinrichtung (17) mit einer Auswerteeinrichtung (20) verbunden ist, die so ausgelegt ist, dass sie ermittelt, wenn der gemessene Wert der elektrischen Leitfähigkeit einen bestimmten Schwellenwert erreicht und bei Erreichen des Schwellenwerts ein Signal ausgibt.

8. Vorrichtung nach Anspruch 7, bei dem die Auswerteeinrichtung (20) so ausgelegt ist, dass sie das Signal ausgibt, wenn nach Erreichen des Schwellenwertes eine vorgegebene Zeitdauer abgelaufen ist.

9. Vorrichtung nach Anspruch 7 oder 8, bei der die Vollentmineralisierungs-Wasseraufbereitung (2, 5, 18) eine dem Zulauf (1) nachgeordnete und den Ionenaustauscherpatronen (5, 18) vorgeordnete Umkehrosmose-Wasseraufbereitung (2) umfasst.

10. Vorrichtung nach einem der Ansprüche 7 bis 9, bei der die Ionenaustauscherpatronen (5, 18) über Schnellverschlüsse mit Leitungen des Systems verbunden sind.

11. Vorrichtung nach einem der Ansprüche 7 bis 10, bei der die Zuführeinrichtung (13) in Durchlaufrichtung des Wassers der Vollentmineralisierungs-Wasseraufbereitung (2, 5, 18) nachgeordnet ist.

## Claims

1. A method for the humidification of air, in which fully demineralized ultrapure water with an increased conductivity is produced from added water by the removal of silicates and other substances and the addition of a gas increasing the conductivity and the fully demineralized ultrapure water of an increased conductivity is atomized by means of at least one high pressure nozzle, **characterized in that**, during the production of the fully demineralized water, water is conveyed through at least two ion exchanger cartridges in succession, the electrical conductivity of the water is measured after passage through the first ion exchanger cartridge and before passage through the second ion exchanger cartridge and the ion exchanger cartridges are replaced with fresh ion exchanger cartridges when the measured value of the electrical conductivity reaches a certain threshold value.

2. The method according to claim 1, in which the ion exchanger cartridges are replaced with fresh ion exchanger cartridges when a certain time period has passed, after the measured electrical conductivity has reached the threshold value.

3. The method according to claim 1 or 2, in which partially demineralized water is generated from the added water by means of reverse osmosis water treatment and fully demineralized ultrapure water is generated from the partially demineralized water by means of series-connected ion exchangers.

4. The method according to one of claims 1 to 3, in which the threshold value of the electrical conductivity is at least 0.4 µS, preferably at least 0.6 µS, further preferably at least 1 µS.

5. The method according to one of claims 2 to 4, in which the predetermined time period after the reaching of the threshold value, at the end of which the ion exchanger cartridges are replaced with fresh ion exchanger cartridges, is an empirical value, which was determined for the humidification of air with a certain output, an added water with a certain concentration of silicates and a certain amount of ion exchanger resin.

6. The method according to one of claims 1 to 5, in which the gas increasing the electrical conductivity is added to the fully demineralized ultrapure water.

7. A device for the humidification of air with a full-demineralization water treatment (2, 5, 18) having an inlet (1), a feed apparatus (13) for a gas arranged downstream of the inlet (1) and an apparatus for the atomizing (16) of water arranged downstream of the full-demineralization water treatment (2, 5, 18) and the feed apparatus (13), wherein a high-pressure pump (7) is arranged in a line between the full-demineralization water treatment (2, 5, 18) and the apparatus for atomizing (16) and the apparatus for atomizing (16) comprises at least one high-pressure nozzle, **characterized in that** the full-demineralization water treatment (2, 5, 18) comprises at least two series-connected ion exchanger cartridges (5, 18) and a conductance value measuring apparatus (17) for measuring the electrical conductivity of the water between the two ion exchanger cartridges (5, 18) is installed in a connection line between the two ion exchanger cartridges (5, 18) and the conductivity measuring apparatus (17) is connected with an evaluation apparatus (20), which is designed such that it determines when the measured value of the electrical conductivity has reached a certain threshold value and outputs a signal when the threshold value is reached.

8. The device according to claim 7, in which the evaluation apparatus (20) is designed such that it outputs a signal when a specified time period has elapsed after the threshold value has been reached.

9. The device according to claim 7 or 8, in which the full-demineralization water treatment (2, 5, 18) comprises a reverse osmosis water treatment (2) arranged downstream of the inlet (1) and upstream of the ion exchanger cartridges (5, 18).

10. The device according to one of claims 7 to 9, in which the ion exchanger cartridges (5, 18) are connected with system lines via quick-release fasteners.

11. The device according to one of claims 7 to 10, in which the feed apparatus (13) is arranged downstream of the full-demineralization water treatment (2, 5, 18) in the direction of water flow.

## Revendications

1. Procédé d'humidification de l'air, dans lequel de l'eau ultrapure entièrement déminéralisée de conductibilité accrue est fabriquée à partir d'eau acheminée par élimination de silicates et d'autres constituants et ajout d'un gaz augmentant la conductibilité, et l'eau ultrapure entièrement déminéralisée de conductibilité accrue est vaporisée au moyen d'au moins une buse à haute pression, **caractérisé en ce que** de l'eau est guidée à travers au moins deux cartouches échangeuses d'ions l'une après l'autre lors de la fabrication de l'eau entièrement déminéralisée, la conductibilité électrique de l'eau est mesurée après le passage à travers la première cartouche échangeuse d'ions et avant le passage à travers la seconde cartouche échangeuse d'ions, et les cartouches échangeuses d'ions sont échangées contre des cartouches échangeuses d'ions fraîches lorsque la valeur mesurée de la conductibilité électrique atteint une valeur seuil déterminée.

2. Procédé selon la revendication 1, dans lequel les cartouches échangeuses d'ions sont échangées contre des cartouches échangeuses d'ions fraîches lorsqu'un laps de temps déterminé s'est écoulé après que la conductibilité électrique mesurée a atteint la valeur seuil.

3. Procédé selon la revendication 1 ou 2, dans lequel de l'eau partiellement déminéralisée est générée à partir de l'eau acheminée au moyen d'une préparation d'eau à osmose inverse et de l'eau ultrapure entièrement déminéralisée est générée à partir de l'eau partiellement déminéralisée au moyen d'échangeurs d'ions montés en série.

4. Procédé selon une des revendications 1 à 3, dans lequel la valeur seuil de la conductibilité électrique se monte à au moins 0,4 µS, de préférence au moins 0,6 µS, de manière davantage préférée au moins 1 µS.

5. Procédé selon une des revendications 2 à 4, dans lequel le laps de temps prédéterminé après l'atteinte de la valeur seuil à l'écoulement duquel les cartouches échangeuses d'ions sont échangées contre des cartouches échangeuses d'ions fraîches est une valeur empirique qui a été calculée pour une humidification de l'air avec une puissance déterminée, une eau acheminée avec une concentration déterminée en silicates et une quantité déterminée de la résine échangeuse d'ions.

6. Procédé selon une des revendications 1 à 5, dans lequel le gaz augmentant la conductibilité électrique est acheminé à l'eau ultrapure entièrement déminéralisée.

7. Dispositif d'humidification de l'air avec une préparation d'eau à déminéralisation entière (2, 5, 18) présentant une amenée (1), un dispositif d'acheminement (13) disposé en aval de l'amenée (1) pour un gaz et un dispositif (16) disposé en aval de la préparation d'eau à déminéralisation entière (2, 5, 18) et du dispositif d'acheminement (13) pour la vaporisation d'eau, dans lequel une pompe à haute pression (7) est disposée dans une conduite entre la préparation d'eau à déminéralisation entière (2, 5, 18) et le dispositif (16) pour la vaporisation, et le dispositif (16) pour la vaporisation comprend au moins une buse à haute pression, **caractérisé en ce que** la préparation d'eau à déminéralisation entière (2, 5, 18) comprend au moins deux cartouches échangeuses d'ions (5, 18) montées en série l'une derrière l'autre et un dispositif de mesure de conductance (17) est encastré dans une conduite de connexion entre les deux cartouches échangeuses d'ions (5, 18) pour la mesure de la conductibilité électrique de l'eau entre les deux cartouches échangeuses d'ions (5, 18), et le dispositif de mesure de conductibilité (17) est relié à un dispositif d'évaluation (20) qui est conçu de sorte qu'il détermine à quel moment la valeur mesurée de la conductibilité électrique atteint une valeur seuil déterminée et émet un signal lors de l'atteinte de la valeur seuil.

8. Dispositif selon la revendication 7, dans lequel le dispositif d'évaluation (20) est conçu de sorte qu'il émet le signal lorsqu'une durée prédéfinie s'est écoulée après atteinte de la valeur seuil.

9. Dispositif selon la revendication 7 ou 8, dans lequel la préparation d'eau à déminéralisation entière (2, 5, 18) comprend une préparation d'eau à osmose inverse (2) disposée en aval de l'amenée (1) et disposée en amont des cartouches échangeuses d'ions (5, 18).

10. Dispositif selon une des revendications 7 à 9, dans lequel les cartouches échangeuses d'ions (5, 18) sont reliées à des conduites du système par le biais de fermetures rapides.

11. Dispositif selon une des revendications 7 à 10, dans lequel le dispositif d'acheminement (13) est disposé en aval de la préparation d'eau à déminéralisation entière (2, 5, 18) dans le sens de passage de l'eau.
